# EUROPÄISCHE PATENTSCHRIFT

(11) **EP 2 114 802 B1**
(45) Veröffentlichungstag und Bekanntmachung des Hinweises auf die Patenterteilung: **29.08.2012**
(21) Anmeldenummer: 07856718.7
(22) Anmeldetag: 13.12.2007
(51) Int. Cl.: B65G 47/14, G07F 9/02, G07F 11/16, G07F 11/50

(54) **SPENDER FÜR EINZELN ODER IN KLEINEN MENGEN ZU OFFERIERENDE GEGENSTÄNDE**
DISPENSER FOR OBJECTS TO BE OFFERED INDIVIDUALLY, OR IN SMALL AMOUNTS
DISTRIBUTEUR POUR DES OBJETS À OFFRIR INDIVIDUELLEMENT OU EN PETITES QUANTITÉS

(30) Priorität: 28.12.2006 DE 102006061904; 28.12.2006 DE 202006019820 U
(43) Veröffentlichungstag der Anmeldung: 11.11.2009
(73) Patentinhaber: Hammer, Reiner, 72227 Egenhausen (DE)
(72) Erfinder: Hammer, Reiner, 72227 Egenhausen (DE)
(74) Vertreter: Stolmár, Matthias
(86) Internationale Anmeldenummer: PCT/EP2007/010975
(87) Internationale Veröffentlichungsnummer: WO 2008/080539

(56) Entgegenhaltungen:
- WO-A-79/00850
- DE-A1- 2 365 790
- US-A- 1 111 379
- US-A- 3 194 431

## Beschreibung

Die vorliegende Erfindung betrifft einen Spender für einzeln oder in kleinen Mengen zu offerierende Gegenstände entsprechend dem einleitenden Teil des Anspruchs 1, wie er aus der DE 2365790 bekannt ist. Die erfindungsgemäßen Spender werden für die Ausgabe von magnetischen oder nicht-magnetischen Gegenständen verwendet.

Das Offerieren von kleinteiligen Gegenständen aus einem Vorratsbehälter ist vornehmlich von Verkaufsautomaten bekannt. Die DE-A-44 15 923 offenbart beispielsweise einen Spender mit einem Vorratsbehälter, der sich für die Entnahme von Lebensmitteln, Zigaretten, Pralinen oder Bonbons eignet. Bei Spendern dieser Art besteht das Bedürfnis, einzeln abgezählte Teile zu offerieren und gleichzeitig auf effektive Weise die Entnahme größerer Mengen zu verhindern. Im Stand der Technik sind Automaten offenbart, die die Ausgabe von einem einzelnen Gegenstand ermöglichen (siehe JP-A-11 283 104). Ferner offenbart die US-A-2 256 282 eine Vorrichtung zum Offerieren von einzelnen oder mehreren Gegenständen, wobei die Anzahl der offerierten Gegenstände von der Höhe des eingeworfenen Geldbetrages abhängt.

Aus der WO 79/00850 ist eine selbstkassierende Verkaufseinrichtung bekannt, die einen Spender für einzeln oder in definierter Anzahl zu offerierender Gegenstände umfasst, die in einem Gehäuse einen mindestens einen Mitnehmer aufweisenden durch einen Motor angetriebenen Drehteller aufweist und der zumindest bereichsweise von einer stationären Wand umfasst wird, wobei die Drehachse des Drehtellers aus der Vertikalen geneigt ist und die stationäre Wand auf einem höher liegenden Niveau eine über einen Schacht mit einer Entnahmevorrichtung verbundene Aussparung mit einer Lichtschrankenanordnung aufweist.

DE 23 65 790 A1 beschreibt eine Vorrichtung zum Sortieren von Werkstücken mit Vertiefungen in einzelnen äußeren Begrenzungsflächen, insbesondere von Lippendichtungsringen, mittels eines auf das Werkstück gerichteten Luftstrahles.

In der Automobilindustrie werden Zuführgeräte verwendet, bei denen Gegenstände wie Befestigungsmittel, beispielsweise Schrauben, Dübel, Muttern etc. durch einen Rüttelvorgang vereinzelt werden, damit ein Arbeiter in der Fertigung eine bestimmte Anzahl von Gegenständen schnell entnehmen kann. Nachteil einer solchen Vorrichtung ist, dass der Rüttelvorgang mit Vibrationen und Lärm verbunden ist. Ferner ermöglichen diese Vorrichtungen keine schnelle Entnahme einer definierten Anzahl derartiger Gegenstände.

Im Stand der Technik ist keine Vorrichtung bekannt, die an einem Arbeitsplatz in der Fertigung das Offerieren einer oder mehrerer ausgewählter magnetischer und nicht-magnetischer Gegenstände wie beispielsweise Befestigungsmittel (darunter werden erfindungsgemäß Muttern Schrauben, Nägel, Bolzen, etc verstanden) ermöglicht, wobei kurze Greif- und Entnahmezeiten und eine ergonomische Entnahme der Gegenstände gewährleistet sind.

Es war daher Aufgabe der vorliegenden Erfindung, einen Spender bereitzustellen, der die vorstehend erwähnten Nachteile der bekannten Vorrichtungen überwindet.

Die Aufgabe wird durch einen Spender für einzeln oder in definierter Anzahl zu offerierender Gegenstände gemäβ Anspruch 1 gelöst.

Unteransprüche sind auf bevorzugte Ausführungsformen des erfindungsgemäßen Spenders gerichtet.

Der Spender ermöglicht kurze Greifzeiten, indem der Arbeiter in der Fertigung die Gegenstände direkt aus dem Schacht Fallschacht über die Entnahmevorrichtung schon vorab abgezählt entnehmen kann. Es entfällt ein Such- und/oder Abzählvorgang verschiedenartiger Gegenstände aus einer größeren Menge von gleichen Gegenständen und aus verschiedenen Vorratsbehältern. Magnetische Mitnehmer ermöglichen gezielt den Transport magnetischer Gegenstände auf dem Drehteller. So können sich zur selben Zeit magnetische und nicht-magnetische Gegenstände auf dem Drehteller befinden, wobei nur die magnetischen Gegenstände auf dem Drehteller transportiert und offeriert werden. Magnetisch wird im Rahmen der Erfindung stets als ferromagnetisch verstanden.

Weiter ist es durch die Realisierung einer Lichtschrankenanordnung an der Aussparung vorteilhafterweise möglich, nur eine vorab genau definierte Anzahl an Gegenständen in die Entnahmevorrichtung zu befördern, so dass eine am Spender arbeitende Person sofort die vorab definierte Anzahl an Gegenständen entnehmen kann. Die Lichtschrankenanordnung (auch kurz als "Lichtschranke" bezeichnet) besteht im wesentlichen aus einer handelsüblichen Lichtschranke, d.h. einer Lichtquelle und einem Sensor. Die Lichtschranke ist mit dem Motor des erfindungsgemäßen Spenders gekoppelt und beendet den Drehvorgang des Drehtellers, sobald die vorab definierte Anzahl der zu entnehmenden Gegenstände die Lichtschranke passiert haben. Die Lichtschrankenanordnung befindet sich bevorzugt am bzw. etwas unterhalb des Scheitelpunkts der Drehbewegung des Drehtellers, so dass im Falle der Entnahme nicht magnetischer Gegenstände diese direkt die Lichtschranke an der Aussparung passieren und anschließend durch den Schacht in die Entnahmevorrichtung befördert werden.

In bevorzugten Ausführungsformen der Erfindung sind die Magnete Permanentmagnete, ganz besonders bevorzugt Elektromagnete. Im letzteren Fall sind sämtliche Magnete kontrolliert ein- und ausschaltbar (steuerbar), in ganz besonders bevorzugten Ausführungsformen ist jeder einzelne Magnet steuerbar, also ein- und ausschaltbar. So kann z.B. ein Magnet dann ausgeschaltet werden, wen der auf diesem Magneten anhaftende ferromagnetische Gegenstand sich an der Aussparung vor der Lichtschrankenanordnung befindet, so dass die Ablösung des Gegenstandes vom Magneten besonders einfach erfolgt. Die Steuerung kann z.B. in besonders bevorzugten Ausführungsformen mit der Lichtschrankenanordnung gekoppelt sein.

Ein weiterer Vorteil der Erfindung liegt darin, dass mehrere Personen an einem Spender arbeiten können, ohne sich gegenseitig zu behindern, da der erfindungsgemäße Spender eine sehr schnelle Entnahme der definierten Anzahl an Gegenständen und kürzere Greifzeiten als herkömmliche Spender ermöglicht.

Das Neigen der Drehachse aus der Vertikalen bewirkt, dass die zu offerierenden Gegenstände, die zunächst über eine programmierbare Auswahlvorrichtung ausgewählt werden, einem Vorratsbehälter entnommen werden und abgezählt dem Drehteller zugeführt werden, sich aufgrund der Schwerkraft in einem tiefer gelegenen Niveau auf dem Drehteller sammeln. Durch die Rotation des Drehtellers und mit Hilfe der Mitnehmer wird bewirkt, dass die Gegenstände auf ein höheres Niveau gehoben werden können.

Die stationäre Wand umfasst den Drehteller erfindungsgemäß auf die Weise, dass die zu offerierenden Gegenstände den Drehteller nur an der am oder unterhalb des Scheitelpunktes des Drehtellers angeordneten Aussparung verlassen können.

In bevorzugten Ausführungsformen der Erfindung ist zur noch besseren Ablösung der Gegenstände vom Drehteller ein Abstreifer vorgesehen, der mit der stationären Wand fest verbunden ist. Mit Hilfe des Abstreifers wird gegebenenfalls das Abführen der Gegenstände ermöglicht. Erst wenn die Gegenstände während der Rotation des Drehtellers die Aussparung der Wand erreichen, können sie vom Drehteller entfernt werden und durch die Lichtschrankenanordnung in einen vorhandenen Schacht in die Entnahmevorrichtung fallen, aus der sie entnommen werden können.

Erfindungsgemäß kann der Spender neben dem Magneten mindestens eine Formkulisse als Reiter umfassen. Bei einer Formkulisse handelt es sich um eine an die Form des zu offerierenden Gegenstandes angepasste Maske. Das bietet den Vorteil, dass gezielt die Mitnahme von Gegenständen bewirkt werden kann, die in die Formkulisse passen. Als Formkulissen seien beispielhaft hakenförmige, bogenförmige und anderweitig konturierte Formen genannt, die die Mitnahme kleiner Gegenstände ermöglichen.

In einer bevorzugten Ausführungsform ist der mindestens eine Magnet ein Elektromagnet, der sich gezielt ein- oder ausschalten lässt. Es können auch alle Magnete Elektromagnete sein, die in bevorzugten Ausführungsformen der Erfindung unabhängig voneinander steuerbar sind. Dadurch können sich gleichzeitig magnetische und nicht-magnetische Gegenstände auf dem Drehteller befinden, während die magnetischen Gegenstände nicht transportiert werden, wenn der Elektromagnet ausgeschaltet ist. Damit ermöglicht der erfindungsgemäße Spender auch eine Auswahl von abzählbaren unterschiedlichen Gegenständen aus einer Gesamtheit von magnetischen und nicht-magnetischen zu offerierenden Gegenständen, die sich auf dem Drehteller befinden.

Wenn die Magnete aus Dauermagneten bestehen, befindet sich an der Aussparung bevorzugt ebenfalls ein mit der Wand verbundener Abstreifer, der das Abführen der Gegenstände vom Drehteller ermöglicht. Natürlich kann dieser Abstreifer auch dann verwendet werden, wenn die Magnete als gesamt oder einzeln ansteuerbare Elektromagnete ausgebildet sind.

In einer bevorzugten Ausführungsform wird der Drehteller von einem Elektromotor angetrieben. Im Vergleich zu den bekannten Vorrichtungen, die eine Rütteltechnik verwenden, bietet der erfindungsgemäße Spender den Vorteil, dass Vibrationen und Lärm verhindert werden.

Der erfindungsgemäße Spender weist ferner eine programmierbare Rechnerschnittstelle auf, so dass die Art und Anzahl der zu offerierenden Gegenstände je nach speziellen Anforderungen beispielsweise einer Montagelinie für Kraftfahrzeuge, Haushaltsgeräten usw. eingestellt werden kann. Es ist von Vorteil, wenn ein Zentralrechner die Steuerung übernimmt, da damit die Fertigung an einer Vielzahl von Montagelinien überwacht und optimiert werden kann.

Können Eine Vielzahl von Gegenständen können in einem ersten Schritt ausgewählt werden, einem Vorratsbehälter entnommen und einem erfindungsgemäßen Spender zugeführt werder Und in einem letzten Schritt auf Anforderung dem Spender entnommen werden. Die Gegenstände können zunächst beispielsweise über ein Display ausgewählt werden, so dass sie im ersten Schritt aus Vorratsbehältern dem Drehteller des erfindungsgemäßen Spenders zugeführt werden. Werden die Gegenstände in der Fertigung benötigt, können sie auf Anforderung von einer an dem Spender arbeitenden Person Arbeiter entnommen werden. Mit diesem Verfahren ist eine Qualitätsverbesserung verbunden, da die Arbeiter in der Fertigung nicht aus verschiedenen Vorratsbehältern auswählen und die Gegenstände entnehmen müssen. So wird eine Fehlerquelle bei der Auswahl des Materials ausgeschlossen.

In einer bevorzugten Ausführungsform wird der Spender für das Offerieren von Gegenständen verwendet. Bevorzugter bestehen die offerierten Gegenstände aus einem magnetischen Material. Beispielsweise wird der Spender zum Offerieren von Schrauben, Nieten, Nägeln, Muttern, Unterlegscheiben oder Dübeln verwendet. Ebenso sind natürlich auch Kunststoffgegenstände wie Dübel, Knöpfe etc oder Holzgegenstände wie Holzdübel in einem erfindungsgemäßen Spender verwendbar. Verwendung findet ein erfindungsgemäßer Spender beispielsweise an Montagelinien für Kraftfahrzeugen, Haushaltsgeräten (Kühlschränke, Waschund Spülmaschinen), Möbeln etc. Insbesondere ermöglich der erfindungsgemäße Spender eine Individualisierung von sich auf der Montagelinie befindlichen zu montierenden Gegenständen bei einem gleichzeitig hohen Automatisierungsgrad. So kann beispielsweise in der Kraftfahrzeugfertigung jedes zu montierende KFZ aufgrund der zunehmenden Individualisierung nach Kundenwünschen einen unterschiedlichen Bedarf an Schrauben, Muttern etc. erfordern. Dieser Bedarf kann vorteilhafterweise durch entsprechende Steuerung der Anzahl an zu entnehmenden Gegenständen durch den erfindungsgemäßen Spender erfüllt werden.

Die Erfindung ist weiter anhand der nachfolgenden Figuren näher beispielhaft erläutert. Es zeigen:
Fig. 1 einen erfindungsgemäßen Spender in der Perspektive,
Fig. 2 die Seitenansicht,
Fig. 3 die Aufsicht und
Fig. 4 die Frontansicht eines erfindungsgemäßen Spenders.

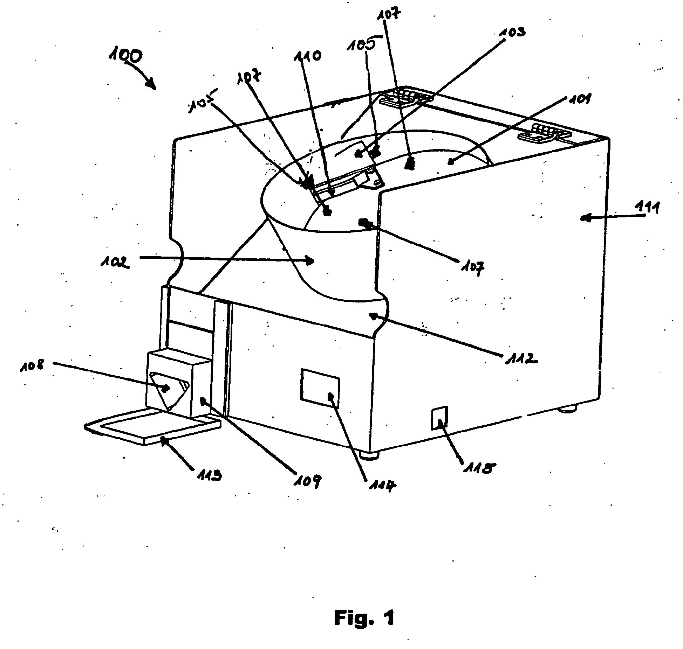

In den Figuren 1 bis 4 ist ein erfindungsgemäßer Spender 100 dargestellt.

Figur 1 zeigt einen erfindungsgemäßen Spender 100 in perspektivischer Ansicht. Dieser umfasst ein Gehäuse 111 oder in anderen Ausführungsformen einen Rahmen. Das Gehäuse 111 weist weiter ein mit einem Rechner verbundenes Display ggf. mit einem Eingabefeld auf, sowie einen Hauptschalter 115. In dem Gehäuse ist auf einer schiefen Ebene 112 ein Drehteller 101 mit Formkulissen 104, eine stationäre Wand 102 mit einer Aussparung 103 und einem Abstreifer 110. Magnete 107 sind an der durch den Punkt bezeichneten Stelle des Drehtellers unterhalb der Drehtellerscheibe angeordnet. In weiteren Ausführungsformen sind zusätzlich Formkulissen als Bestandteil der Mitnehmer vorgesehen. Die schiefe Ebene 112 (auch als schräge Ebene bezeichnet) kann mit dem Gehäuse 11 entweder fest verbunden sein, oder aber nach oben hin schwenkbar z.B mittels wie in Figur 1 gezeigten Scharnieren 116. Unter dieser schiefen Ebene ist der in Figur 1 nicht dargestellte Motor angebracht, so dass die bevorzugte Ausführungsform mit aufklappbarer schiefer Ebene 112 auch den Zugang zum Motor, z.B. bei dessen Wartung ermöglicht. Die Lichtschrankenanordnung ist in Figur 1 nicht dargestellt. Die schiefe Ebene 112 weist einen Winkel von 20 bis 70° zur Vertikalen auf. Bevorzugt beträgt der Winkel zwischen 30 bis 50°, ganz besonders bevorzugt zwischen 30 und 40°, noch bevorzugter zwischen 35 und 40°. Im vorliegenden Fall beträgt der Winkel 35°. Ist der Winkel kleiner als 20°, werden zu viele oder nur vereinzelte Gegenstände mitgenommen. Ist der Winkel größer als 70°, werden fast keine Gegenstände mitgenommen. Generell gilt folgende Korrelation zwischen Winkel und Stärke des/der Magneten: je größer, also je steiler der Winkel, desto größer muss die Stärke des Magneten sein. Die Drehachse des Drehtellers 101 ist somit im gleichen Winkel wie die schiefe Ebene 112 aus der Vertikalen gekippt. Durch eine Rotation des Drehtellers mittels des nicht dargestellten Motors werden nun Gegenstände aus einem unteren Niveau in Richtung der Aussparung 103 bewegt. Die Aussparung 103 ist am Scheitelpunkt des Drehtellers oder kurz unterhalb nach dem Scheitelpunkt angebracht. Mit Hilfe des Abstreifers 110 werden die Gegenstände vom Drehteller entfernt durch die nicht dargestellte Lichtschranke erzeugt durch die Lichtschrankenanordnung 105 von der Aussparung 103 über einen nicht dargestellten Schacht in die Entnahmevorrichtung 109 überführt. Diese weist eine Verriegelung 108 auf, die erst beispielsweise mittels Druck gelöst werden kann, wenn sich die vorab definierte Anzahl an Gegenständen in der Entnahmevorrichtung 109 befindet. Die Steuerung und Entriegelung erfolgt dabei über die Lichtschranke. An der Frontseite können die Gegenstände entnommen werden. Um zu vermeiden, dass Gegenstände auf den Boden fallen, wenn z.B. die Bedienperson nicht sämtliche Gegenstände in der Hand auffangen kann ist an dem erfindungsgemäßen Spender weiter ein Auffangbehälter 113 angebracht.

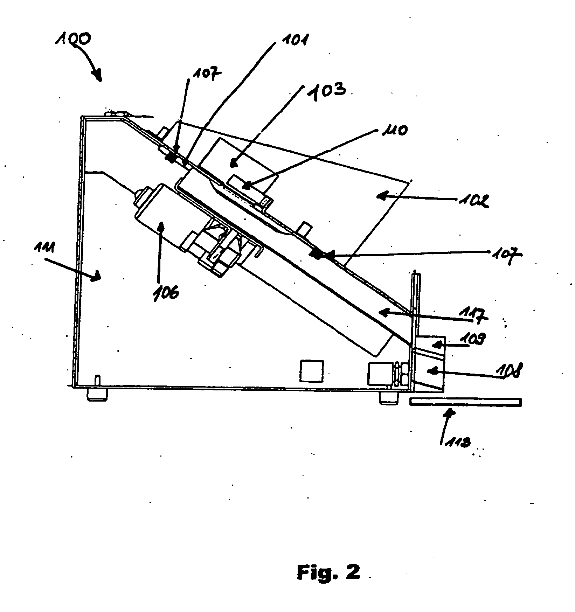

Fig. 2 zeigt den Querschnitt des erfindungsgemäßen Spenders gemäß Figur 1. Figur 2 zeigt dabei außerdem den unter der schiefen Ebene 112 angeordneten Elektromotor 106 und den Schacht 117, der die Aussparung 103 mit der Entnahmevorrichtung 109 verbindet. Auf der Rückseite des Drehtellers sind Magnete 107 angebracht.

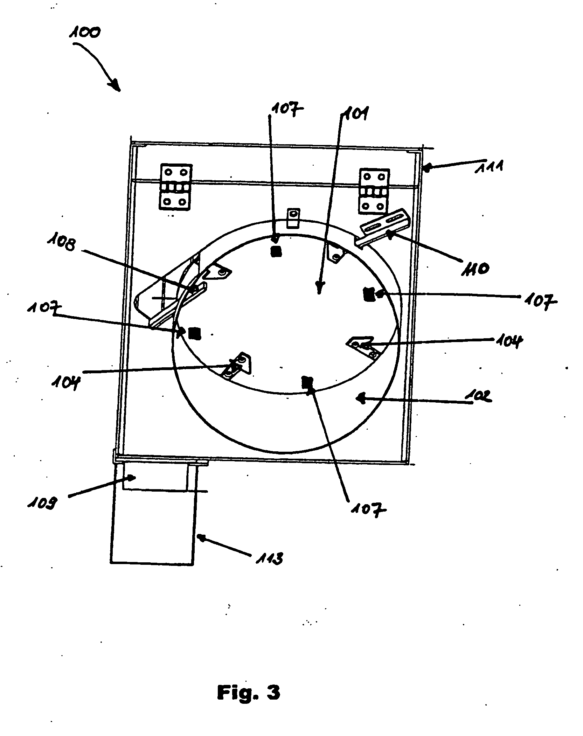

Figur 3 zeigt eine Draufsicht auf einen erfindungsgemäßen Spender. Hier bestehen die Mitnehmer aus Formkulissen in Form von 4 Haken 104 und unterhalb des Drehtellers 101 angeordneten Magneten 107. Die Haken 104 bestehen aus Metall, in anderen Ausführungsformen jedoch aus Kunststoff und sind beispielsweise mittels Befestigungselementen wie Schrauben auf dem Drehteller angeordnet.

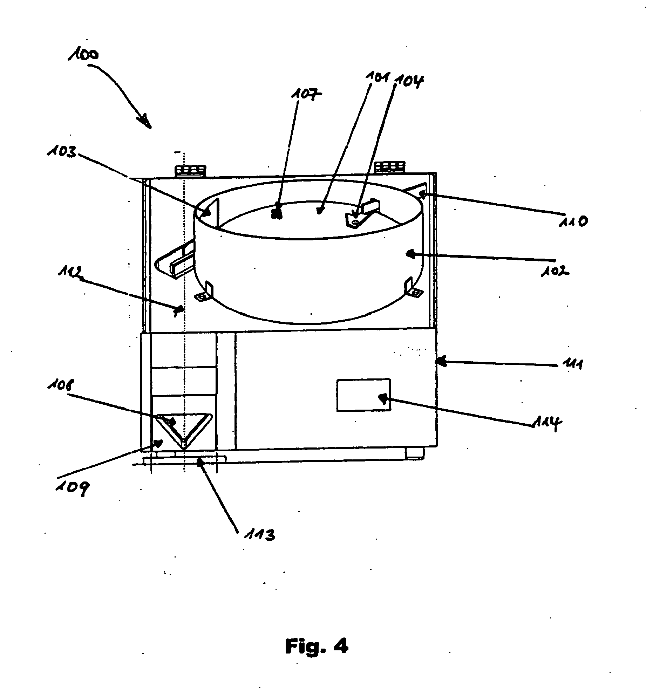

Figur 4 zeigt eine Frontansicht des erfindungsgemäßen Spenders wobei die Bezugszeichen wie vorstehend definiert sind.

## Patentansprüche

1. Spender (100) für einzeln oder in definierter Anzahl zu offerierender Gegenstände, der in einem Gehäuse einen mindestens einen Mitnehmer aufweisenden durch einen Motor (106) angetriebenen Drehteller (101) aufweist, der zumindest bereichsweise von einer stationären Wand (102) umfasst wird, wobei die Drehachse des Drehtellers aus der Vertikalen geneigt ist und wobei der Mitnehmer einen Magneten (107) umfasst
**dadurch gekennzeichnet, dass** die stationäre Wand (102) auf einem höher liegenden Niveau eine über einen Schacht mit einer Entnahmevorrichtung (109) verbundene Aussparung (103) mit einer Lichtschrankenanordnung (105) aufweist und wobei der Mitnehmer mindestens eine Formkulisse (104) umfasst.

2. Spender (100) nach Anspruch 1, **dadurch gekennzeichnet, dass** der Magnet (107) ein steuerbarer Elektromagnet ist.

3. Spender (100) nach Anspruch 2, **dadurch gekennzeichnet, dass** die Gegenstände ferromagnetisch oder nicht ferromagnetisch sind.

4. Spender (100) nach Anspruch 2, **dadurch gekennzeichnet, dass** die Gegenstände aus Metall, Holz oder Kunststoffen bestehen.

5. Spender (100) nach einem der vorhergehenden Ansprüche, **dadurch gekennzeichnet, dass** der Drehteller (101) von einem Elektromotor (106) angetrieben wird.

6. Spender (100) nach Anspruch 5, **dadurch gekennzeichnet, dass** die Entnahmevorrichtung (109) eine Verriegelung (108) aufweist.

7. Spender (100) nach Anspruch 6, **dadurch gekennzeichnet, dass** die Verriegelung auf Druck entriegelbar ist.

8. Spender (100) nach Anspruch 7, **dadurch gekennzeichnet, dass** an der Aussparung (103) ein steuerbarer Abstreifer (110) angeordnet ist.

9. Spender nach Anspruch 7 weiter umfassend eine Rechnerschnittstelle.

## Claims

1. Dispenser (100) for objects to be offered individually or in a defined amount, that comprises in a housing a rotary plate (101) comprising at least a catch and powered by a motor (106), that is at least zonally enfolded by a stationary wall (102), wherein the rotary axis of the rotary plate is inclined from the vertical and wherein the catch comprises a magnet (107)
**characterized in that** the stationary wall (102) comprises on a higher level a recess (103) with a photoelectric barrier assembly (105), coupled via a shaft to an outlet device (109), and wherein the catch comprises at least a shaped crank (104).

2. Dispenser (100) according to claim 1, **characterized in that** the magnet (107) is a controllable solenoid.

3. Dispenser (100) according to claim 2, **characterized in that** the objects are ferromagnetic or not ferromagnetic.

4. Dispenser (100) according to claim 2, **characterized in that** the objects consist of metal, wood or synthetics.

5. Dispenser (100) according to one of the preceding claims, **characterized in that** the rotary plate (101) is powered by an electric motor (106).

6. Dispenser (100) according to claim 5, **characterized in that** the outlet device (109) comprises a locking (108).

7. Dispenser (100) according to claim 6, **characterized in that** the locking unlockable by force.

8. Dispenser (100) according to claim 7, **characterized in that** a controllable deflector (110) is arranged at the recess (103).

9. Dispenser according to claim 7, further comprising a Computerinterface.

## Revendications

1. Distributeur (100) pour des objets à distribuer individuellement ou en nombre défini qui présente dans un boitier un plateau tournant (101) entouré au moins par tronçons d'une paroi fixe (102) et présentant au moins un entraîneur et étant entraîné par un moteur (106), sachant que l'axe de rotation du plateau tournant est incliné de la verticale, sachant que l'entraîneur comprend un aimant (107),
**caractérisé en ce que** la paroi fixe (102) présente à un niveau plus élevé un évidement (103) comprenant un agencement de cellules photoélectriques (105) et relié via une gaine à un dispositif de prélèvement (109) et sachant que l'entraîneur comprend au moins une coulisse à forme (104).

2. Distributeur (100) selon la revendication 1, **caractérisé en ce que** l'aimant (107) est un électroaimant pouvant être commandé.

3. Distributeur (100) selon la revendication 2, **caractérisé en ce que** les objets sont ferromagnétiques ou non-ferromagnétiques.

4. Distributeur (100) selon la revendication 2, **caractérisé en ce que** les objets sont constitués de métal, de bois ou de plastiques.

5. Distributeur (100) selon l'une des revendications précédentes, **caractérisé en ce que** le plateau tournant (101) est entraîné par un moteur électrique (106).

6. Distributeur (100) selon la revendication 5, **caractérisé en ce que** le dispositif de prélèvement (109) présente un dispositif de verrouillage (108).

7. Distributeur (100) selon la revendication 6, **caractérisé en ce que** le verrouillage peut être déverrouillé par pression.

8. Distributeur (100) selon la revendication 7, **caractérisé en ce qu'**un déflecteur (110) pouvant être commandé est agencé sur l'évidement (103).

9. Distributeur (100) selon la revendication 7, comprenant en outre une interface d'ordinateur.
